# FASCICULE DE BREVET EUROPEEN

(11) **EP 1 575 738 B1**
(45) Date de publication et mention de la délivrance du brevet: **06.09.2006**
(21) Numéro de dépôt: 03786033.5
(22) Date de dépôt: 20.11.2003
(51) Int. Cl.: B23Q 17/20, B23Q 11/00, B23Q 17/24, B24B 47/22, B24B 49/14

(54) **PROCEDE DE PRISE DE MESURE PAR UNE MACHINE-OUTIL D'USINAGE, OUTIL ADAPTE A SA MISE EN OEUVRE ET PRODUIT LOGICIEL EN ASSURANT LA GESTION**
VERFAHREN ZUR MESSUNG MIT EINER WERKZEUGMASCHINE, WERKZEUG DAFÜR UND RECHNERPROGRAMMPRODUKT ZU IHRER VERWALTUNG
METHOD FOR MEASURING WITH A MACHINING MACHINE-TOOL, TOOL ADAPTED THEREFOR AND SOFTWARE PRODUCT MANAGING SAME

(30) Priorité: 22.11.2002 FR 0214616
(43) Date de publication de la demande: 21.09.2005
(73) Titulaire: COMAU SYSTEMES FRANCE, 78191 Trappes (FR)
(72) Inventeur: LAQUERBE, Jean-Marc, F-81100 Castres (FR)
(74) Mandataire: Thurgood, Alexander John
(86) Numéro de dépôt international: PCT/FR2003/003434
(87) Numéro de publication internationale: WO 2004/048030

(56) Documents cités:
- EP-A- 1 044 764
- US-A- 4 078 868
- US-A- 4 704 825
- US-A- 5 329 457

## Description

### DOMAINE D'APPLICATION DE L'INVENTION

La présente invention a trait au domaine de l'usinage et notamment aux moyens assurant la prise de mesure sur les pièces usinées et à usiner, ainsi que la prise en compte de la dilatation des sous-ensembles fonctionnels participant à l'opération d'usinage pour atteindre une qualité d'usinage optimisée.

### DESCRIPTION DE L'ART ANTÉRIEUR

La demanderesse a observé, notamment dans le domaine du fraisage des vilebrequins, que les sous-ensembles fonctionnels telles les plaquettes de coupe, les disques porte-outil, les réducteurs placés entre l'outil et le moteur, etc..., participant à l'opération d'usinage, sont soumis à un phénomène de dilatation dû à l'augmentation progressive de la chaleur pendant l'opération d'usinage au sein même desdits sous-ensembles.

Cette dilatation a notamment pour conséquence de rendre relativement imprécis les usinages auxquels participent lesdits sous-ensembles.

Bien entendu, ce phénomène de dilatation peut faire l'objet d'un calcul théorique permettant de prévoir l'évolution des tolérances au fur et à mesure du fonctionnement de la machine-outil, mais ce calcul, basé sur une hypothèse de départ où l'outil et la machine-outil sont "froids" ne tient que difficilement compte des phases transitoires dans lesquelles intervient par exemple un changement d'outil, l'outil étant alors "froid" tandis que les moyens d'entraînement ont eux atteint une grande température.

Il est donc difficile de faire respecter les bonnes côtes d'autant plus que les critères de précision requis sur les usinages devant être réalisés notamment sur les vilebrequins, sont de plus en plus drastiques.

De nos jours, la mesure de l'imprécision des usinages est classiquement réalisée "a posteriori", c'est à dire qu'une fois l'usinage réalisé et un défaut détecté sur la pièce, une modification automatique ou manuelle est opérée sur lesdits sous-ensembles fonctionnels, comme par exemple sur la course mise en oeuvre par le moyen de mise en mouvement assurant la plongée de l'outil ou disque porte-outil vers la pièce, pour permettre la correction de la course de l'outil. Il est bien compréhensible que si la correction améliore les usinages, une telle mesure "a posteriori", une fois la pièce réalisée, ne peut apporter une solution optimale dans le cadre des dites phases transitoires.

De plus, une mesure de la dilatation des sous-ensembles fonctionnels participant à l'usinage à partir des pièces usinées est tributaire des aléas dimensionnels des pièces brutes ainsi que des défauts possibles de prise de pièce.

Ce phénomène de dilatation, dû à l'augmentation de la température, devient un problème d'une importance croissante à résoudre, dans la mesure où les solutions d'usinage s'orientent aujourd'hui pour éviter le retraitement des liquides projetés, vers un usinage à sec, c'est à dire vers une opération d'usinage où les liquides de coupe et/ou de refroidissement sont absents du poste d'usinage.

De même, la polyvalence des machines-outils a pour conséquence une augmentation des phases de changement d'outils multipliant le nombre des phases transitoires.

Il existe dans l'art antérieur des outillages tel le disque porte-outil décrit dans le document américain n° US 4 078 868 qui accueille sur sa périphérie des inserts de coupe dont la position des plaquettes de coupe est susceptible d'être réglée. Néanmoins, le réglage de la position des plaquettes de coupe est une opération longue et fastidieuse. En outre, un tel réglage doit être réalisé en tenant compte de paramètres telle la dilatation qu'on ne peut que difficilement obtenir comme expliqué plus haut.

Pour ce faire, il existe dans l'art antérieur des moyens de mesure des pièces susceptibles d'être utilisées dans la station d'usinage proprement dite pour des applications spécifiques. Ainsi, par exemple, il existe des dispositifs électroniques dits "palpeurs" se plaçant à la place de l'outil sur un coulant porte-outil et qui mesurent par une succession de contacts, les côtes d'une pièce. Une fois, le contact détecté par le palpeur ce dernier envoie un signal à la commande numérique commandant le mouvement du coulant et donc du palpeur qui l'arrête, et qui vient prendre la mesure du mouvement réalisé sur la règle de mesure classiquement associée aux moyens de mise en mouvement d'une machine-outil d'usinage à axes numérisés. Cette solution a pour désavantages de requérir la présence d'un dispositif électronique particulièrement onéreux ainsi que de nécessiter une phase de changement d'outil, ce qui a notamment pour conséquence de provoquer une pause dans la phase de fabrication.

Il existe également des procédés tel celui décrit dans le brevet américain n°US 4 704 825 qui propose d'assurer un dimensionnement optimal d'une forme réalisée par un outil susceptible de se mouvoir non seulement sur les axes classiques X, Y et Z mais également sur un axe U de façon à proposer un usinage de type orbital. A cette fin, le procédé propose de faire réaliser à l'outil à l'arrêt une course selon l'axe U jusqu'à venir en contact avec un capteur ayant une surface de positionnement de référence, la course entre la position de départ et la surface de référence correspondant au rayon de l'alésage fini à réaliser par usinage orbital. La broche porte-outil mobile en translation selon les axes X, Y et Z avec l'outil centré sur l'axe de la broche, est placée par rapport au détecteur dans une première position reproduisant entre l'axe de la broche et la surface de référence du capteur, le rayon de l'alésage fini à réaliser par usinage orbital. Puis une deuxième position est prise par l'outil seul mobile en translation selon l'axe U, deuxième position arrêtée par le contact de la surface de coupe de l'outil de fraisage avec la surface de référence du capteur.

Il existe également dans l'art antérieur des moyens de mesure du couple ou de l'effort exercé à l'intérieur d'un moyen de mise en mouvement, ainsi que des moyens de mise en mouvement équipés de ces moyens de mesure.

### DESCRIPTION DE L'INVENTION

Partant de cet état de fait, la demanderesse a mené des recherches visant à proposer une alternative au palpeur pour assurer une prise de mesure sur les pièces.

De même, un autre objectif de l'invention vise la conception d'un procédé d'usinage susceptible de mieux prendre en compte le phénomène de dilatation.

Ces recherches ont abouti à la conception d'un procédé de prise de mesure par une machine-outil d'usinage particulièrement judicieux permettant d'éviter la présence jusqu'ici nécessaire d'un palpeur ou d'un moyen de détection supplémentaire, pour la prise de mesure sur une pièce présente dans la zone d'usinage.

Le procédé de prise de mesure de l'invention est applicable à une machine-outil comportant un poste d'usinage dans lequel se déplace en mouvement relatif au moins un outil ou disque porte-outil par rapport à au moins une pièce à usiner, le déplacement relatif de l'outil par rapport à la pièce étant assuré par au moins un moyen de mise en mouvement dont la position et la course sont contrôlées et connues, le moyen de mise en mouvement étant équipé d'un moyen de détection de l'effort produit par ledit moyen de mise en mouvement.

Selon l'invention, ce procédé est remarquable en ce qu'il consiste à faire réaliser à l'outil ou au disque porte-outil, un contact avec un point choisi comme référence dans le poste d'usinage par commande dudit moyen de mise en mouvement qui, par dépassement d'une valeur d'effort préalablement définie comme un seuil, déclenche la prise de mesure de façon à connaître la valeur de la course réalisée et à répéter l'opération pour comparer les valeurs relevées et pour corriger les courses lors de l'opération d'usinage proprement dite à réaliser.

Cette caractéristique est particulièrement avantageuse en ce qu'elle permet d'envisager la réalisation d'une prise de mesure directement par contact sans nécessiter la présence d'un palpeur. Cette caractéristique peut s'appliquer aussi bien sur un coulant porte outil mobile que sur un dispositif porte pièce mobile avec coulant ou électrobroche porte-outil fixe.

L'utilisation d'un seuil pour l'effort lors du contact réalisé par le moyen de mise en mouvement évite la présente d'un appareillage électronique supplémentaire pour le déclenchement de la prise de mesure. En effet, la mesure de l'effort (ou du couple dans le cadre d'un moyen de mise en mouvement mettant en oeuvre un mouvement de rotation) mis en oeuvre par un moyen de mise en mouvement est une fonctionnalité classique dans les moyens de mise en mouvement d'une machine-outil. L'invention propose une exploitation nouvelle de cette fonctionnalité pour aboutir à un objectif particulièrement avantageux aussi bien au niveau technique qu'au niveau investissement. Par exemple, la possibilité d'éviter la présence d'un palpeur proprement dit supprime son coût dans le prix d'une machine-outil.

Ainsi, contrairement à ce que décrit le document américain n° US 4 704 825, ce n'est pas le point de référence qui sert de capteur assurant le déclenchement de la prise de mesure mais c'est le dépassement d'une valeur seuil au niveau des efforts pratiqués par le moyen de mise en mouvement lorsque ce dernier vient en butée sur ledit point qui assure cette fonction. Le point ou la surface de référence ne sont donc pas constitués dans l'invention, ni par un capteur ni par un quelconque moyen de détection.

De même, si la mesure est prise avec l'outil, le changement d'outil et la phase d'attente correspondants ne sont plus nécessaires.

L'utilisation de cette fonctionnalité comme moyen de déclenchement d'une prise de mesure est particulièrement originale car cette dernière est classiquement utilisée pour mesurer par exemple les sur-régimes pendant les phases d'usinage et en aucun cas servir de capteur de contact avec une butée pour mesurer la course du sous ensemble mis en oeuvre par le moyen de mise en mouvement qu'elle équipe.

La demanderesse propose de réaliser par ce nouveau procédé, des prises de mesure comparatives directement sur la pièce à usiner ou déjà usinée. En effet, selon une caractéristique particulièrement avantageuse de l'invention, le procédé consiste à faire réaliser à l'outil ou disque porte-outil arrêté, un contact avec la pièce à usiner, de façon à connaître la valeur de la course réalisée et à répéter l'opération pour comparer les valeurs relevées et corriger les courses et orientations lors de l'opération d'usinage proprement dite à réaliser.

Sur cette base, les recherches menées par la demanderesse ont abouti à la conception d'une variante du procédé de prise de mesure de l'invention particulièrement judicieuse, pour prendre en compte le phénomène de dilatation dû à la chaleur produite par les phases d'usinage d'une machine-outil.

Selon l'invention, ce procédé est remarquable en ce qu'il consiste à faire réaliser à l'outil ou disque porte-outil arrêté, un contact avec un point choisi comme référence sur la machine-outil par commande dudit moyen de mise en mouvement, de façon à connaître la valeur de la course réalisée et à répéter l'opération pour comparer les valeurs relevées et corriger les courses lors de l'opération d'usinage proprement dite à réaliser.

Ce procédé est remarquable en ce qu'il permet de s'appuyer sur un élément de la machine-outil à l'intérieur du poste d'usinage dont la position n'est pas ou est moins sensible au phénomène de dilatation. Il permet de faire rentrer dans la chaîne des côtes mesurées celles présentes entre le contact de l'outil et le moyen de mise en mouvement permettant ce contact, c'est à dire les sous-ensembles fonctionnels les plus soumis au phénomène de dilatation comme le disque porte outil ainsi que l'ensemble de mise en mouvement et de réduction assurant sa rotation. Bien entendu, rentre dans cette chaîne de côtes mesurées, la côte liée à l'outil ou au disque porte-outil qui constitue un des sous-ensembles les plus soumis au phénomène de dilatation.

En outre, la mesure n'est plus réalisée sur la pièce usinée avec les aléas et inconvénients précités inhérents à un tel contrôle mais directement sur les sous-ensembles fonctionnels participant à l'opération d'usinage ce qui, dans le cadre d'une prise en compte du phénomène de dilatation, est particulièrement intéressant.

De même, la vérification des côtes pourra être réalisée à chaque événement susceptible de les modifier comme un changement d'outil avant réalisation de toute pièce.

Conformément à cette caractéristique du procédé de l'invention, la machine-outil fonctionne donc à un instant donné comme un palpeur à la différence près que les différences de valeurs entre les différentes courses réalisées par la tête mobile constituée par l'outil ne servent pas à réaliser une prise de mesure de l'objet palpé mais bien une mesure des sous-ensembles fonctionnels dont l'outil participant à la mise en mouvement du palpeur en comparant les longueurs de courses réalisées sur un même parcours, la différence résultant de la dilatation desdits sous-ensembles. L'utilisation comme palpeur de l'outil lui-même est particulièrement novatrice.

Selon l'invention, une prise de mesure de référence est réalisée à partir de données dites de bases comme par exemple en début de cycle d'usinage pendant lequel l'outil et ses moyens d'entraînement sont froids et donc non dilatés. Le procédé consiste ensuite à réaliser régulièrement ou à des moments particuliers de l'opération d'usinage des prises de mesure permettant de prendre en compte les variations dues à la dilatation et d'en répercuter directement les corrections sur notamment les moyens d'entraînement de l'outil.

Cette prise de mesure est rendue possible par la fonctionnalité précitée intégrée dans les moyens de mise en mouvement qui consiste à mesurer le couple ou l'effort développé. Ainsi, le procédé de l'invention adapté à une machine-outil dans laquelle le moyen de mise en mouvement vers la pièce de l'outil ou disque porte-outil est équipé d'un moyen de détection de l'effort produit, consiste notamment à établir lors de la phase de prise de mesure, un seuil déclencheur d'effort pour le moyen de mise en mouvement assurant le mouvement de l'outil vers la pièce de façon à ce qu'une fois le mouvement de plongée arrêté par la butée et le seuil franchi, la course réalisée soit mesurée.

Un autre objectif de l'invention est de fournir un outil ou un disque porte-outil particulièrement adapté au procédé de l'invention. En effet, bien qu'un outil ou disque porte-outil standard soit susceptible de remplir cette fonction, la demanderesse a imaginé pour certaines applications un aménagement d'un outil ou disque porte-outil d'usinage de façon à lui permettre de mieux réaliser cette nouvelle fonction de prise de mesure.

L'invention concerne également un produit logiciel assurant la gestion du procédé de prise de mesure remarquable en ce qu'il consiste à garder en mémoire les mesures prises en début de procédé et déclenchées par le moyen de mise en mouvement pour réaliser des comparaisons des mesures postérieures avec celles mises en mémoire et corriger en conséquence les courses et orientations des pièces ou des outils.

Les concepts fondamentaux de l'invention venant d'être décrits, d'autres caractéristiques et avantages apparaîtront plus clairement à la lecture de la description qui suit et en regard des dessins annexés, de modes de réalisation du procédé et de l'outil de l'invention.

### BRÈVE DESCRIPTION DES DESSINS

La figure 1a est un dessin schématique en vue de dessus d'un premier mode de réalisation d'un bâti de machine-outil d'usinage de vilebrequin susceptible de mettre en oeuvre le procédé de l'invention avec un premier mode de réalisation de l'outil en position de repos,
la figure 1b est un dessin de la machine outil illustrée en figure 1a avec l'outil en contact avec un point de référence sur la machine-outil,
la figure 1c est un dessin schématique en vue de côté de la machine-outil dans la position illustrée en figure 1b,
la figure 2a est un dessin schématique en vue de dessus d'un deuxième mode de réalisation de bâti de machine-outil d'usinage de vilebrequin susceptible de mettre en oeuvre le procédé de l'invention avec un deuxième mode de réalisation d'outil en position de repos,
la figure 2b est un dessin de la machine-outil illustrée en figure 2a avec l'outil en contact avec un point de référence sur la machine-outil,
la figure 2c est un dessin schématique en vue de côté de la machine-outil dans la position illustrée en figure 2b,
La figure 2d est un dessin schématique d'un troisième mode de réalisation d'un disque porte-outil conforme à l'invention,
la figure 3a est un dessin schématique en vue de dessus d'un mode de réalisation quelconque d'un bâti de machine-outil d'usinage de vilebrequin susceptible de mettre en oeuvre le procédé de l'invention avec un mode de réalisation quelconque de l'outil en position de repos,
la figure 3b est un dessin de la machine-outil illustrée en figure 3a avec l'outil en contact la pièce à usiner installée sur la machine-outil,
la figure 4a est un dessin schématique en vue de dessus d'un mode de réalisation quelconque d'un bâti de machine-outil d'usinage comprenant un coulant porte-outil susceptible de mettre en oeuvre le procédé de l'invention avec un mode de réalisation quelconque de l'outil en position de repos,
la figure 4b est un dessin de la machine-outil illustrée en figure 4a avec l'outil en contact la pièce à usiner installée sur la machine-outil,

### DESCRIPTION DES MODES DE RÉALISATION PRÉFÉRÉS

Comme illustrée sur le dessin des figures 1a, 1b, 1c, 2a, 2b, 2c, 3a et 3b, la machine-outil référencée M dans son ensemble comprend un poste d'usinage composé d'une station de mise en mouvement de la pièce à usiner qui est ici un vilebrequin référencé V en face de laquelle est disposée une station d'usinage assurant la mise en mouvement d'un outil ou disque porte-outil O.

La station de mise en mouvement du vilebrequin V est notamment composée de deux mandrins 110 et 120 assurant la rotation du vilebrequin V par rapport au bâti fixe de la machine-outil M. L'outil O est quant à lui, mis en mouvement par un sous-ensemble 200 assurant sa rotation et ses mouvements rectilignes alternatifs parallèles selon la double flèche F1 et perpendiculaires selon la double flèche F2 à l'axe du vilebrequin V.

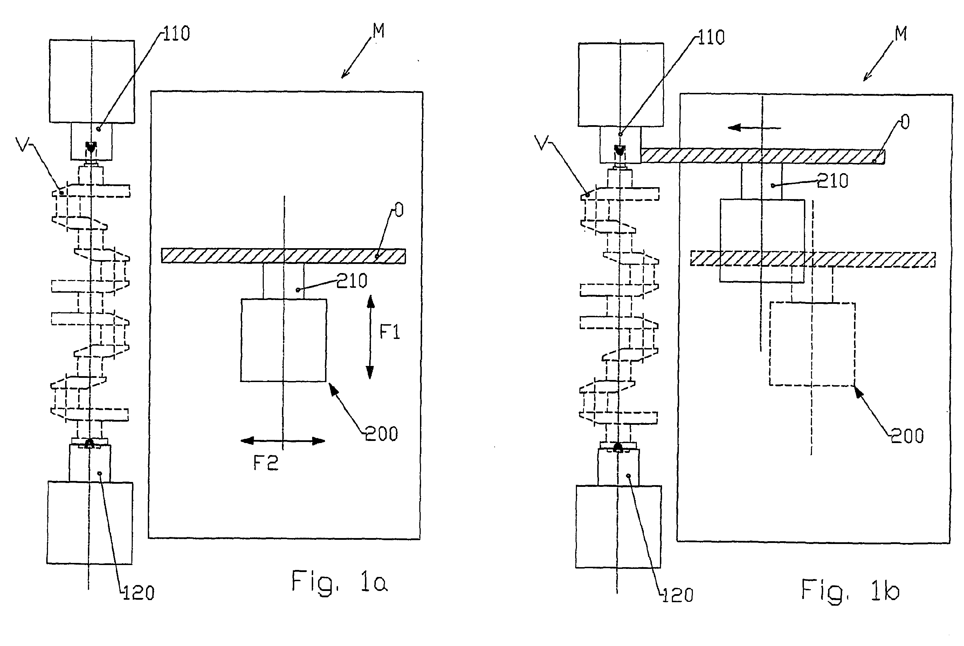

Comme illustrée sur le dessin des figures 1b, 2b, 3b, la machine-outil M comprend un bâti et met en oeuvre au moins un mouvement de plongée de l'outil O vers la pièce V.

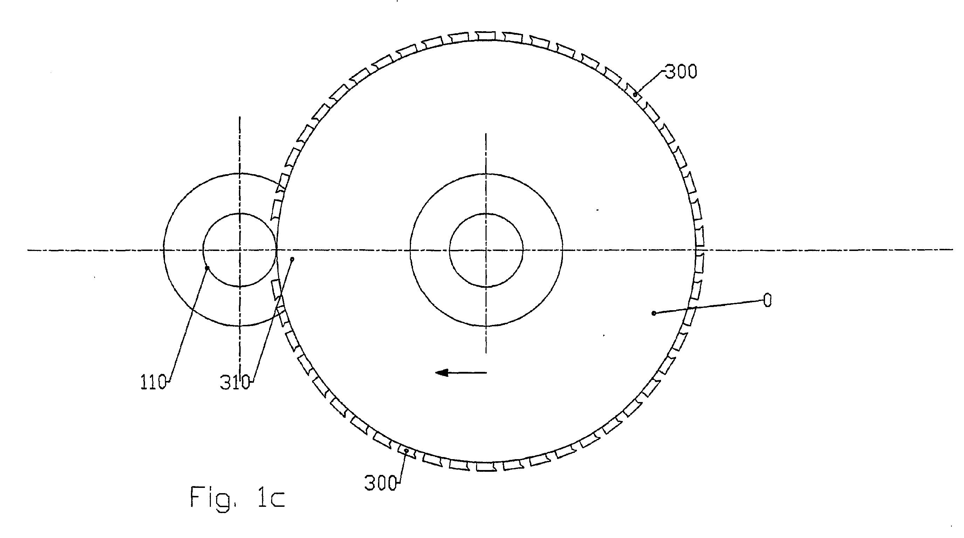

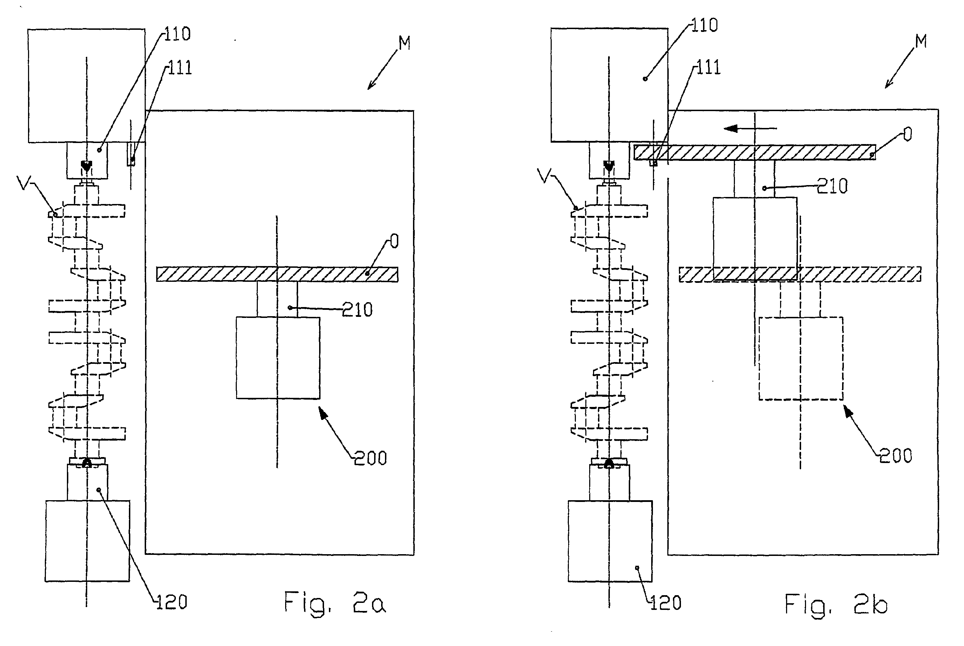

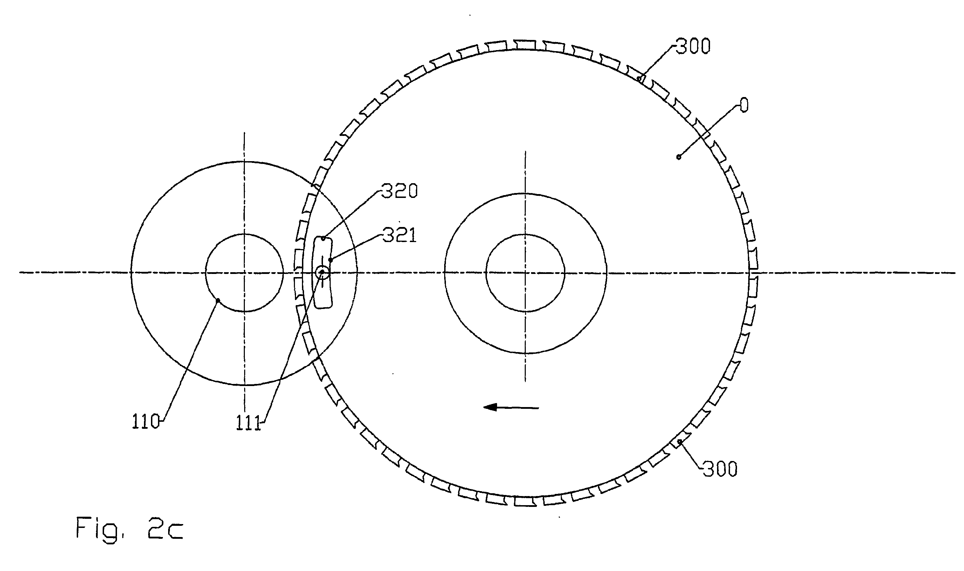

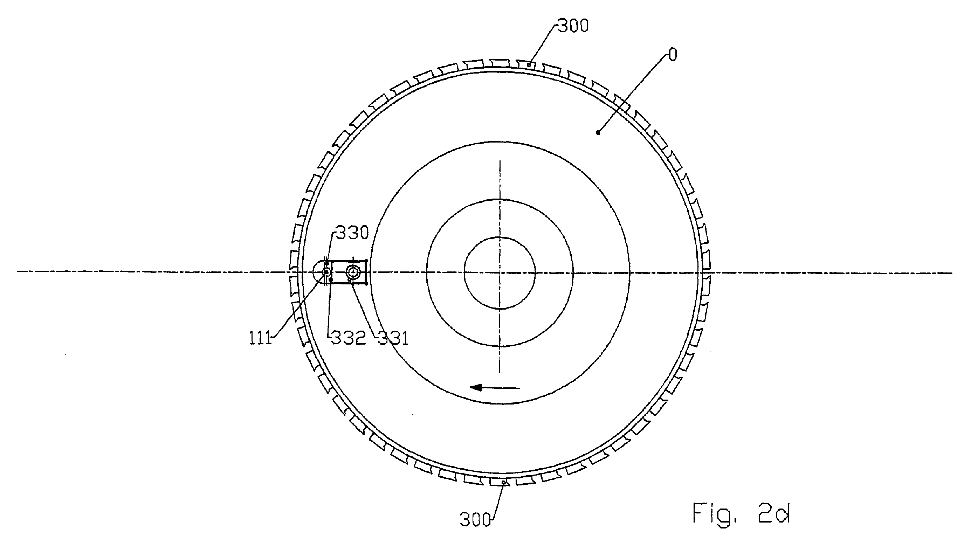

Selon l'invention, le procédé est remarquable en ce qu'il consiste, comme illustré sur le dessin des figures 1b,1c, 2b et 2c, à arrêter la rotation de l'outil O et à faire réaliser à ce dernier le mouvement de plongée vers un point fixe du poste d'usinage de la machine-outil M choisi comme référence jusqu'à son contact. En effet, il importe peu que la position du point de référence soit exactement connue par rapport à la position d'un outil à partir de l'instant où tous les contacts sont réalisés sur un même point. Selon le mode de réalisation illustré sur le dessin des figures 1b et 1c, ce point fixe se situe sur la station de mise en mouvement de la pièce et est constitué par la surface extérieure du mandrin 110 de tenue du vilebrequin V. Bien entendu, la prise de mesure est réalisée lorsque non seulement l'outil O mais également le mandrin 110, sont arrêtés dans leur rotation ou mouvement de travail.

Conformément à l'invention, l'outil 0 arrêté en rotation est mis en mouvement par les mêmes moyens de mise en mouvement rectiligne que ceux utilisés lors de l'usinage. Ainsi, dès que le moteur de plongée, dans son mouvement de plongée représenté par la flèche F2 tournée vers le vilebrequin V, atteint un certain effort servant de seuil du fait de la mise en butée de l'outil O contre le point choisi comme référence, une mesure est prise à partir de la règle de mesure classiquement associée audit moteur de plongée.

L'utilisation détournée d'une fonctionnalité intégrée, proposée par ce mode de réalisation permet d'envisager la mise en oeuvre du procédé de l'invention sans configuration matérielle supplémentaire, ce qui en fait une solution d'optimisation des coûts de production particulièrement efficace.

Selon l'invention, le procédé d'usinage est remarquable en ce qu'il consiste à réaliser une prise de mesure avant le début d'une phase d'usinage afin d'obtenir une mesure de référence de la course de l'outil ou disque porte-outil avec les sous-ensembles fonctionnels froids permettant sa comparaison avec les prises de mesure ultérieures et les éventuelles corrections de course correspondantes.

Ainsi, selon que l'outil O et ses moyens de mise en mouvement sont plus ou moins dilatés, le moment d'enclenchement de la prise de mesure et la grandeur physique obtenue seront différents et permettront par comparaison avec la mesure de référence, de prendre en compte les différences de côtes et corriger la course de l'outil en conséquence. Ainsi, si le seuil intervient plus tôt que le moment de référence la course de l'outil sera diminuée d'une valeur permettant de corriger ladite dilatation. Grâce au procédé d'usinage de l'invention intégrant ces phases de mesure, le phénomène de dilatation peut être quantifié et corrigé à tout moment et notamment pendant les phases transitoires qui constituaient dans l'art antérieur la source des variables non quantifiables efficacement.

Le sous-ensemble de réduction du mouvement de rotation 210 du disque porte-outil 0 qui constitue un des éléments les plus soumis au phénomène de dilatation, rentre dans la chaîne de côte mesurée puisque ce sous-ensemble est dépendant cinématiquement du mouvement mis en oeuvre par le moteur de plongée.

Selon l'invention, le procédé de mesure du type de celui mettant en oeuvre au moins un disque porte-outil sur la périphérie duquel sont disposées des plaquettes de coupe est remarquable en ce qu'il consiste à orienter l'outil O pour réaliser à l'arrêt le contact avec la même zone angulaire du disque porte outil.

Selon la caractéristique illustrée sur le dessin de la figure 1c, le contact entre le point de référence et l'outil ou disque porte-outil 0 est réalisé sur une zone angulaire de ce dernier, vierge de toute plaquette. Cette caractéristique évite, tout en faisant rentrer la majorité du disque porte outil dans la chaîne de côte mesurée, un contact répétitif sur les plaquettes elles-mêmes, aidant ainsi à l'allongement de leur durée de vie.

Selon un mode de réalisation préféré, la demanderesse a imaginé un outil particulièrement adapté à ce procédé. Selon l'invention, ce disque porte outil O est remarquable en ce qu'il est préformé pour accueillir sur sa périphérie des plaquettes de coupe 300 à l'exception d'au moins une zone 310 de surface suffisante pour permettre son contact après orientation angulaire de l'outil, avec un point d'appui fixe de position connue dans le poste d'usinage.

La butée de référence peut être constituée par tout point susceptible d'être atteint par l'outil O à partir de ses moyens de mise en mouvement de travail et dont la position n'est pas ou est moins soumise au phénomène de dilatation.

Les figures 2a, 2b, 2c et 2d illustrent un mode de réalisation différent en ce que le point de référence sur lequel vient s'appuyer l'outil O est matérialisé par une butée 111. Bien que cette butée puisse servir également de point d'appui à la périphérie du disque porte outil, le mode de réalisation illustré propose un outil O remarquable en ce qu'il est ménagé d'une lumière 320 dont une des faces 321 vient en contact, après orientation angulaire de l'outil, avec un point prévu à cet effet sur la machine-outil M dans son poste d'usinage, c'est à dire la butée 111. Comme illustré sur les dessins des figures 2a, 2b et 2c, le sous-ensemble de mise en mouvement 200 met en oeuvre plusieurs mouvements pour assurer l'engagement de la butée 111 qui vient en saillie par rapport une partie fixe du mandrin 110.

Selon un mode préféré mais non limitatif de réalisation illustré par le dessin de la figure 2d, le disque porte-outil O est remarquable en ce qu'il est ménagé d'un trou oblong 330 qui accueille une pièce d'usure 331 amovible prévue pour venir en contact avec la butée 111. Comme pour la lumière 320, le trou oblong 330 n'est pas nécessairement débouchant, les moyens de mise en mouvement de l'outil O offrant suffisamment de précision pour placer l'outil de façon à ce que l'extrémité de la butée 111 vienne dans le trou oblong 330 et que le moyen de mise en mouvement de l'outil 0 selon l'axe de plongée mette en contact la pièce d'usure 331 avec ladite butée 111. En conséquence, la butée 111 apparaît sur la figure 2d pour illustrer le contact et en vue en coupe. En étant non traversant, le trou oblong 330 offre une surface de positionnement et de fixation à la pièce d'usure 331.

Cette solution technologique a pour avantage d'éviter l'absence de parties coupantes sur une partie de la périphérie du disque porte-outil O ce qui, dans le cas de disque de fraisage, n'est pas possible. Elle évite également un enlèvement de matière trop important au niveau du disque ou une détérioration de la surface d'appui de la lumière 320. En effet, par définition la pièce d'usure pourra être changée dès l'apparition de signe d'usure.

Selon une caractéristique particulièrement avantageuse, la surface 332 de la pièce d'usure 331 prévue pour venir en contact avec la butée, adopte un profil circulaire dont le rayon passe par l'axe de rotation de l'outil O. La surface de contact de la butée 111 étant elle-même circulaire, un contact entre les deux surfaces, c'est-à-dire, la surface cylindrique de la butée 111 d'une part et la surface cylindrique 332 de la pièce d'usure 331 d'autre part, garantit un contact optimal.

Comme illustrées, sur les dessins des figures 1c, 2c et 2d, les surfaces venant en contact avec le point choisi comme référence dans le poste d'usinage sont, lorsqu'elles ne sont pas constituées par les parties coupantes elles-mêmes, situées au plus près de ces dernières pour que la prise en compte du phénomène de dilatation se fasse le plus loin possible dans la chaîne de côtes qui va du moyen de mise en mouvement jusqu'aux parties coupantes de l'outil.

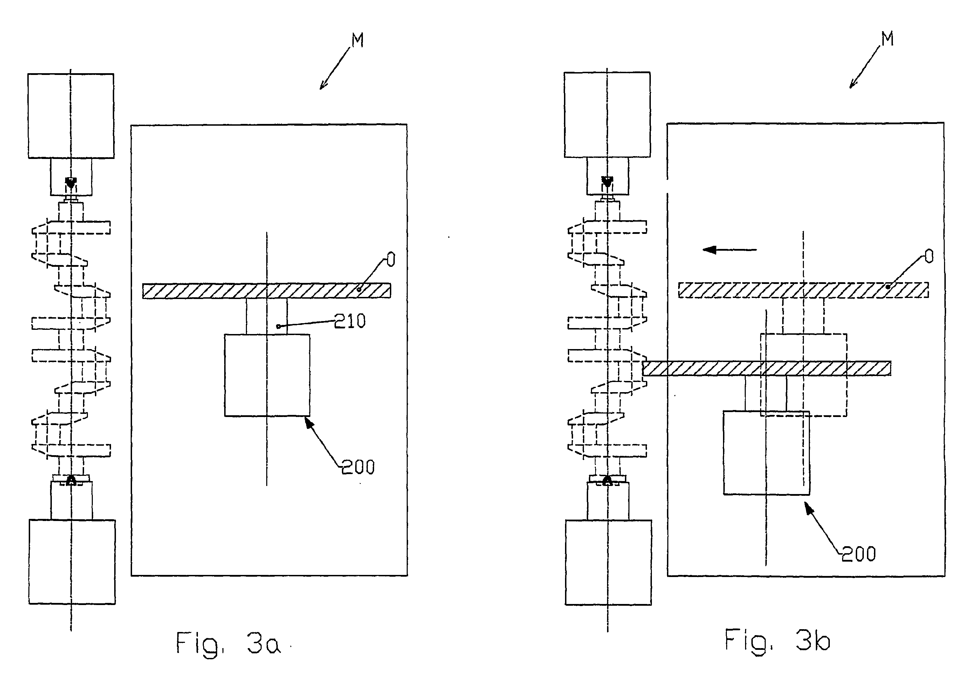

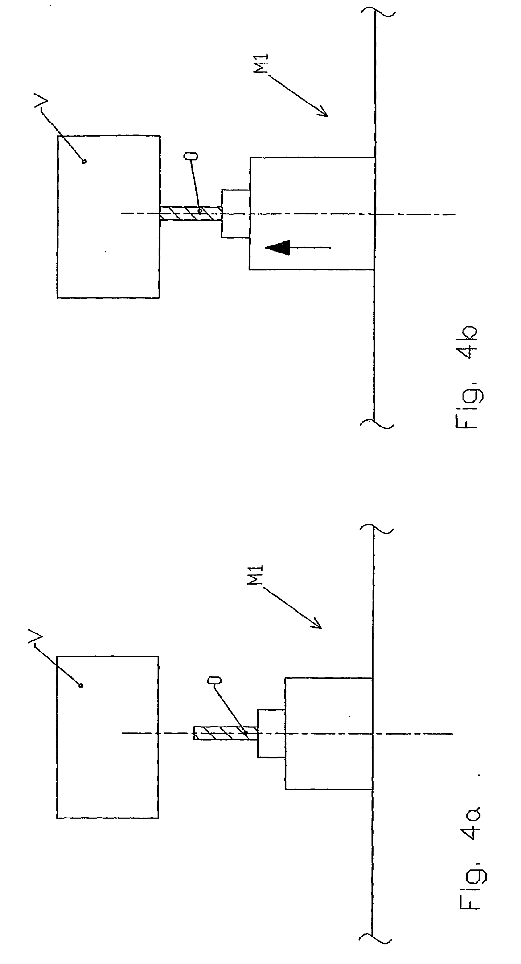

Les figures 3a, 3b, 4a et 4b illustrent la mise en oeuvre du procédé de prise de mesure sur la pièce de l'invention. Ainsi, comme illustrée, le contact de l'outil O est réalisé avec la pièce V afin d'assurer une prise de mesure directe sur la pièce V pour mettre en oeuvre le procédé de l'invention consistant à faire réaliser à l'outil ou disque porte-outil O arrêté, un contact avec la pièce à usiner V, de façon à connaître la valeur de la course réalisée et à répéter l'opération pour comparer les valeurs relevées et corriger les courses et orientations lors de l'opération d'usinage proprement dite à réaliser.

Les figures 3a et 3b illustre une mise en oeuvre du procédé de l'invention au moyen d'une machine-outil M semblable à celle illustrée par les figures 1a, 1b, 1c, 2a, 2b, 2c qui réalise l'usinage d'un vilebrequin V au moyen d'un disque porte-outil O. Les figures 4a et 4b illustrent quant à elles une machine-outil M1 comprenant un coulant porte outil assurant sa mise en mouvement.

La comparaison de deux mesures prises au moyen du procédé de l'invention permet par exemple de corriger l'orientation d'une pièce avant usinage.

L'invention qui vient d'être décrite l'a été dans le cadre d'une divulgation et non d'une limitation. Bien entendu, divers aménagements et modifications pourront intervenir sans sortir du cadre de l'invention telle que définie par les revendications.

## Revendications

1. Procédé de prise de mesure applicable à une machine-outil (M) comportant un poste d'usinage dans lequel se déplace en mouvement relatif au moins un outil ou disque porte-outil (O) par rapport à au moins une pièce à usiner (V), le déplacement relatif de l'outil (O) par rapport à la pièce (V) étant assuré par au moins un moyen de mise en mouvement (200) dont la position et la course sont contrôlées et connues, le moyen de mise en mouvement (200) étant équipé d'un moyen de détection de l'effort produit par ledit moyen de mise en mouvement (200), **CARACTÉRISÉ EN CE QU'**il consiste à faire réaliser à l'outil ou au disque porte-outil (O), un contact avec un point choisi comme référence dans le poste d'usinage par commande dudit moyen de mise en mouvement (200) qui, par dépassement d'une valeur d'effort préalablement définie comme un seuil, déclenche la prise de mesure de façon à connaître la valeur de la course réalisée et à répéter l'opération pour comparer les valeurs relevées et corriger les courses lors de l'opération d'usinage proprement dite à réaliser.

2. Procédé selon la revendication 1, **CARACTÉRISÉ EN CE Qu'**il consiste à faire réaliser à l'outil ou disque porte-outil (O) arrêté, un contact avec un point choisi comme référence sur la machine-outil (M) par commande dudit moyen de mise en mouvement, de façon à connaître la valeur de la course réalisée et à répéter l'opération pour comparer les valeurs relevées et corriger les courses lors de l'opération d'usinage proprement dite à réaliser.

3. Procédé selon la revendication 1, **CARACTÉRISÉ EN CE QU'**il consiste à faire réaliser à l'outil ou disque porte-outil (O) arrêté, un contact avec la pièce à usiner (V), de façon à connaître la valeur de la course réalisée et à répéter l'opération pour comparer les valeurs relevées et corriger les courses et orientations lors de l'opération d'usinage proprement dite à réaliser.

4. Procédé selon la revendication 1 adapté à une machine-outil (M) dans laquelle le moyen de mise en mouvement (200) vers la pièce (v) de l'outil ou disque porte-outil (O) est équipé d'un moyen de détection de l'effort produit, **CARACTÉRISÉ EN CE QU'**il consiste à établir lors de la phase de prise de mesure, un seuil déclencheur d'effort pour le mouvement assurant le mouvement de plongée de l'outil ou disque porte-outil (O) vers la pièce (V) de façon à ce qu'une fois l'effort seuil franchi lors du contact, le mouvement de plongée soit arrêté et la course mesurée.

5. Procédé selon la revendication 1, **CARACTÉRISÉ EN CE QU'**il consiste à réaliser une prise de mesure avant le début d'une phase d'usinage afin d'obtenir une mesure de référence de la course de l'outil ou disque porte-outil (O) avec les sous-ensembles fonctionnels froids permettant sa comparaison avec les prises de mesure ultérieures et les éventuelles corrections de course correspondantes.

6. Procédé d'usinage selon la revendication 1 du type de celui mettant en oeuvre au moins un disque porte-outil (O) sur la périphérie duquel sont disposées des plaquettes de coupe (300), **CARACTÉRISÉ EN CE QU'**il consiste à orienter le disque porte-outil (O) pour réaliser à l'arrêt le contact avec la même zone angulaire du disque porte-outil (O).

7. Procédé d'usinage selon la revendication 6, **CARACTÉRISÉ EN CE QUE** le contact entre le point de référence et l'outil ou disque porte-outil (O) est réalisé sur une zone angulaire de ce dernier (310), vierge de toute plaquette (300).

8. Disque porte-outil (O) permettant de mettre en oeuvre le procédé selon la revendication 6, **CARACTÉRISÉ PAR LE FAIT QU'**il est ménagé d'un trou oblong (330) qui accueille une pièce d'usure (331) amovible prévue pour venir en contact avec la butée (111).

9. Produit logiciel assurant la gestion du procédé de prise de mesure selon les revendications 1 à 6, **CARACTÉRISÉ EN CE QU'**il consiste à garder en mémoire les mesures prises en début de procédé et déclenchées par le moyen de mise en mouvement, pour réaliser des comparaisons des mesures postérieures avec celles mises en mémoire et corriger en conséquence les courses et orientations des pièces (V) ou des outils (O).

## Claims

1. Measuring method applicable to a machine-tool (M) comprising a machining station in which at least one tool or tool holder disk (0) is moved relative to at least one part to be machined (V), the relative displacement of the tool (O) with respect to the part (V) being controlled by at least one actuating means (200) for which the position and stroke are controlled and known, the actuating means (200) being fitted with a means of detection of the force produced by the said actuating means (200), **characterised in that** it consists of making the tool or the tool holder disk (0) come into contact with a point chosen as a reference in the machining station by controlling the said actuating means (200) which, through exceeding a force value previously defined as a threshold, triggers the measurement so as to find out the value of the stroke performed and in repeating the operation to compare the recorded values and to correct the strokes during the machining process to be carried out itself.

2. Method according to claim 1, **characterised in that** it consists of making the tool or the tool holder disk (O), when stopped, come into contact with a point chosen as a reference in the machine-tool (M) by controlling the said actuating means so as to find out the value of the stroke performed and in repeating the operation to compare the recorded values and to correct the strokes during the machining process to be carried out itself.

3. Method according to claim 1, **characterised in that** it consists of making the tool or the tool holder disk (0), when stopped, come into contact with the part (V) to be machined so as to find out the value of the stroke performed and in repeating the operation to compare the recorded values and to correct the strokes and orientations during the machining process to be carried out itself.

4. Method according to claim 1, adapted to a machine-tool (M) in which the actuating means (200) of the tool or the tool holder disk (0) towards the part (V) is fitted with a means of detecting the force produced, **characterised in that** it consists of setting up a force trigger threshold for the means controlling the plunge feed movement of the tool or the tool-holder disk (0) towards the part (V), during the measuring phase, such that the feed plunge movement is stopped and the stroke is measured as soon as the force threshold has been exceeded.

5. Method according to claim 1, **characterised in that** it consists of making a measurement before the beginning of a machining phase so as to obtain a reference measurement for the stroke of the tool or tool holder disk (0) when the functional subassemblies are cold so that a comparison can be made with subsequent measurements and any necessary corrections to the corresponding strokes can be made.

6. Machining method according to claim 1 of the type using at least one tool holder disk (0) on the periphery of which cutting inserts (300) are arranged, **characterised in that** it consists of orienting the tool holder disk (0) to stop in contact with the same angular area of the tool holder disk (0).

7. Machining method according to claim 6, **characterised in that** contact is made between the reference point and the tool or the tool holder disk (0) on an angular area (310) of the tool or tool holder disk (O) in which there are no inserts (300).

8. Tool holder disk (O) used to implement the method according to claim 6, **characterised in that** an oblong hole (330) is formed in it that holds a removable wear part (331) designed to come into contact with the stop (111).

9. Software product for managing the measuring method according to claims 1 to 6, **characterised in that** it consists of memorising measurements made at the beginning of the method and triggered by the actuating means, to make comparisons between subsequent measurements and memorised measurements, and consequently to correct the strokes and orientations of parts (V) or tools (O).

## Patentansprüche

1. Verfahren zur Messung, anwendbar auf eine Werkzeugmaschine (M) mit einer Bearbeitungsstation, in der sich in relativer Bewegung zumindest ein Werkzeug oder eine Werkzeugträgerscheibe (O) gegen zumindest einen zu bearbeitenden Teil (V) bewegt, wobei die relative Bewegung des Werkzeugs (O) gegen den Teil (V) von zumindest einem Antriebsmittel (200), dessen Position und Weg kontrolliert und bekannt sind, sichergestellt wird, wobei das Antriebsmittel (200) mit einem Mittel zur Erfassung der durch das besagte Antriebsmittel (200) hergestellten Beanspruchung ausgestattet ist, **dadurch gekennzeichnet, dass** es darin besteht, das Werkzeug oder die Werkzeugträgerscheibe (O) dazu zu bringen, einen Kontakt mit einem als Referenz gewählten Punkt in der Bearbeitungsstation durch Steuerung des besagten Antriebsmittels (200) herzustellen, das durch Überschreiten eines im Voraus als Schwelle definierten Beanspruchungswertes die Messung auslöst, um den Wert des zurückgelegten Weges zu kennen und den Vorgang zu wiederholen, damit die ermittelten Werte verglichen und die Wege beim eigentlichen, auszuführenden Bearbeitungsvorgang korrigiert werden können.

2. Verfahren nach Anspruch 1, **dadurch gekennzeichnet, dass** es darin besteht, das angehaltene Werkzeug oder die angehaltene Werkzeugträgerscheibe (O) dazu zu bringen, einen Kontakt mit einem als Referenz gewählten Punkt auf der Werkzeugmaschine (M) durch Steuerung des besagten Antriebsmittels herzustellen, um den Wert des zurückgelegten Weges zu kennen und den Vorgang zu wiederholen, damit die ermittelten Werte verglichen und die Wege beim eigentlichen, auszuführenden Bearbeitungsvorgang korrigiert werden können.

3. Verfahren nach Anspruch 1, **dadurch gekennzeichnet, dass** es darin besteht, das angehaltene Werkzeug oder die angehaltene Werkzeugträgerscheibe (O) dazu zu bringen, einen Kontakt mit dem zu bearbeitenden Teil (V) herzustellen, um den Wert des zurückgelegten Weges zu kennen und den Vorgang zu wiederholen, damit die ermittelten Werte verglichen und die Wege beim eigentlichen, auszuführenden Bearbeitungsvorgang korrigiert werden können.

4. Verfahren nach Anspruch 1 angepasst an eine Werkzeugmaschine (M), in der das Antriebsmittel (200) des Werkzeugs oder der Werkzeugträgerscheibe (O) für die Bewegung in Richtung des Teils (V) mit einem Mittel zur Erfassung der hergestellten Beanspruchung ausgestattet ist, **dadurch gekennzeichnet, dass** es darin besteht, während der Messungsphase eine auslösende Beanspruchungsschwelle für die Bewegung aufzustellen, welche die Planbewegung des Werkzeugs oder der Werkzeugträgerscheibe (O) in Richtung des Teils (V) sicherstellt, so dass die Planbewegung, sobald die Beanspruchungsschwelle beim Kontakt überschritten wird, angehalten und der Weg gemessen wird.

5. Verfahren nach Anspruch 1, **dadurch gekennzeichnet, dass** es darin besteht, eine Messung vor dem Beginn einer Bearbeitungsphase durchzuführen, um einen Referenzmesswert des Weges des Werkzeugs oder der Werkzeugträgerscheibe (O) mit den kalten funktionellen Untereinheiten zu erhalten, wodurch der Vergleich mit späteren Messungen und die eventuellen entsprechenden Wegkorrekturen ermöglicht werden.

6. Bearbeitungsverfahren nach Anspruch 1 des Typs mit Einsatz von zumindest einer Werkzeugträgerscheibe (O) an deren Rand Schneidplättchen (300) angeordnet sind, **dadurch gekennzeichnet, dass** es darin besteht, die Werkzeugträgerscheibe (O) auszurichten, um beim Anhalten den Kontakt mit derselben Winkelzone der Werkzeugträgerscheibe (0) herzustellen.

7. Bearbeitungsverfahren nach Anspruch 6, **dadurch gekennzeichnet, dass** der Kontakt zwischen dem Referenzpunkt und dem Werkzeug oder der Werkzeugträgerscheibe (O) in einer Winkelzone der Letzteren (310), frei von sämtlichen Plättchen (300), hergestellt wird.

8. Werkzeugträgerscheibe (O), welche die Umsetzung des Verfahrens nach Anspruch 6 ermöglicht, durch die Tatsche **gekennzeichnet**, dass sie mit einem Langloch (330) versehen ist, das ein abnehmbares Verschleißteil (331) aufnimmt, das dafür vorgesehen ist, mit dem Anschlag (111) in Kontakt zu treten.

9. Softwareprodukt, das die Verwaltung des Messverfahrens nach den Ansprüchen 1 bis 6 sicherstellt, **dadurch gekennzeichnet, dass** es darin besteht, die zu Beginn des Verfahrens genommenen und durch das Antriebsmittel ausgelösten Messwerte zu speichern, um Vergleiche zwischen den nachfolgenden Messwerten und jenen, die gespeichert wurden, anzustellen und folglich die Wege und Ausrichtungen der Teile (V) und Werkzeuge (0) zu korrigieren.
